# EUROPEAN PATENT APPLICATION

(11) **EP 1 055 559 A2**
(43) Date of publication of application: **29.11.2000**
(21) Application number: 00304434.4
(22) Date of filing: 25.05.2000
(51) Int. Cl.: B60R 9/04

(54) **Method for securing two members together and assembly of members so secured**

(30) Priority: 28.05.1999 GB 9912589; 04.02.2000 GB 0002646
(71) Applicant: JAC Products Deutschland GmbH, 42285 Wuppertal (DE)
(72) Inventor: Boller, Paul, Solihull, West Midlands B95 5JA (GB); Da Costa Lima, Antonio Francisco Leote, 1140 Lisbon (PT)
(74) Representative: Shaw, Laurence

(57) **Abstract**

Two members having respectively an aperture and a portion inserted in the aperture, for example, a side rail and one roof support and fairing piece of a motor car roof rack, may be secured together by adhesive or it has also been proposed to fit a wedge or spring clip to maintain a force fit between the inserted portion and aperture. In the invention, an inserted plug portion 5, 12 is secured in an aperture by an axially extending elongate spring member 6, 10, 13 engaged between the aperture and inserted portion and positioned in an axial groove or slot 7, 14 preferably formed in the side of the inserted portion.

The spring member may be a C-shaped, overlapped or coiled roll pin 6, 10 or a helical spring 13. In the latter case, it is advantageous for the spring 13 to be arranged so that, when the inserted plug portion 12 is engaged in the aperture of the rail 11, the coils of the spring tend be pushed over to permit such engagement relatively easily but disengagement requires much more force because the coils tend to jam between the plug portion and aperture. To enhance this effect, the coil spring can have a polygonal cross-section and the wire of the coil can have a sharp-edged section, e.g. a rhomboid.

## Description

This invention relates to a method for securing two members together to form an assembly thereof and to an assembly comprising two members secured together.

More particularly, but not exclusively, the invention relates to a method and assembly in which a moulded mounting member and an extruded tubular member are secured together, for example forming part of a motor car roof rail mounting arrangement.

It is known for a motor car roof rail to comprise moulded support and fairing pieces fitted to the car roof at respective ends of each of two extruded tubular rails extending along respective sides of the motor car roof. Each support and fairing piece comprises a plug portion which fits into one end of the respective rail and means are provided to secure the plug portion within the end of the rail. Adhesive may be used for this or a device for maintaining an interference fit, for example a spring clip engaged around the plug portion within the end of the rail as disclosed in DE 4427776 and DE 19606544, or a wedge as disclosed in EP 0774381. DE 4427776 discloses a method for fixing a plug portion of a roof support into the hollow end of a side rail using a spring clip engaged in a circumferential groove in the plug and attached to a springy strap which extends along the interior of the rail in front of the plug. To provide clearance for the strap, it lies in a shallow axial groove in the plug. At the free end of the strap, there is a peg or catch portion which engages in an opening in the wall of the rail.

According to one aspect of the present invention, there is provided a method for securing first and second members together wherein a portion of the first member is inserted within an aperture in the second member and the inserted portion is held within said aperture by an elongate spring engaged between the first and second members and contained in an axially extending slot.

According to a second aspect of the invention there is provided an assembly comprising a first member having a portion inserted in an aperture in a second member, and a spring engaged between the two members to hold the inserted portion in the aperture, the spring being elongate and contained in an axially extending slot.

For a better understanding of the invention and to show how the same may be carried into effect reference will now be made by way of example to the accompanying drawings, in which:
Figure 1 is a perspective diagrammatic view of a motor car roof with roof rails;
Figure 2 is an exploded elevation of parts of a support and fairing piece and tubular rail assembly;
Figure 3 is a section on the line III-III in Figure 1;
Figure 4 is a perspective view of a roll pin;
Figure 5 is a perspective view of another roll pin;
Figure 6 is a section corresponding to Figure 3, but having another rail shape; and
Figure 7 is an exploded perspective view of a tubular rail member and a plug member.
Figures 8, 8b, 8c and 8d are respective diagrams showing in cross-section two forms of helical spring and two diagrams showing the cross-sectioned shape of two sorts of wire used for a helical spring.

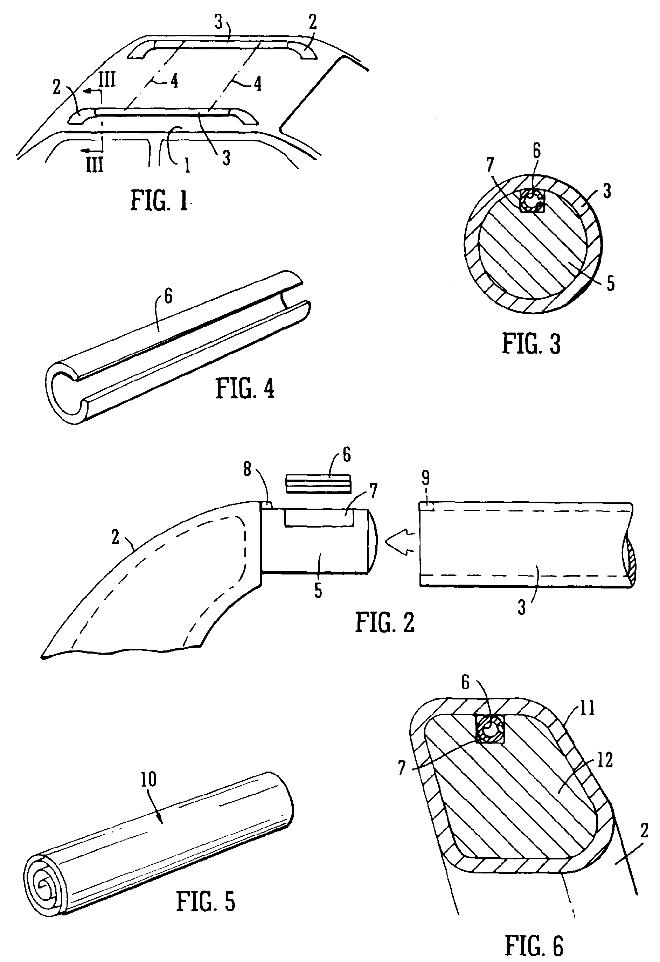

The motor car of which the roof 1 is shown in Figure 1 has two parallel roof rails 3 extending along the sides of the car roof. Each rail 3 is mounted between two support and fairing pieces 2 fixed to the roof, for example by bolts which are not shown. Cross bars (not shown) may be fitted to the roof rails at the positions 4 as shown. The rails 3 are cylindrical hollow extrusions and the support and fairing pieces 2 have round plug portions 5 engaged in respective ends of the rails. A spring member in the form of a roll pin 6 is fitted in a slot 7 formed in each plug portion 5. As can be seen, the width of the slot 7 closely matches that of the roll pin and the depth of the slot is somewhat less than the diameter of the pin when the plug portion is not engaged in the end of the rail 13. In other words, the roll pin 6 is dimensioned such that, when the end of the rail 3 is pushed onto the plug-portion 5, the pin 6 is compressed and maintains strong spring contact between the plug portion and the inner surface of the wall of the end of the rail, i.e. so as to prevent the rail from being easily pulled off the plug portion again.

At the top of the plug portion 5 just where it meets the main body of the support and fairing piece 2, there is a nib 8 which engages a matching slot 9 in the end of the tubular rail 3 so as to better locate the rail. The nib 8 and slot 9 may not be necessary, especially if the rail 3 is not cylindrical (as described below) because then the cross-sectional shape of the rail may be effective to ensure proper location.

The roll pin could be of the kind 10 which , in cross section is overlapped or even coiled as shown in Figure 5.

Instead of being cylindrical, the rail 11 and plug portion 12 could have a more complex cross-section designed for visual appeal and/or best aerodynamics an example of which is shown in Figure 6.

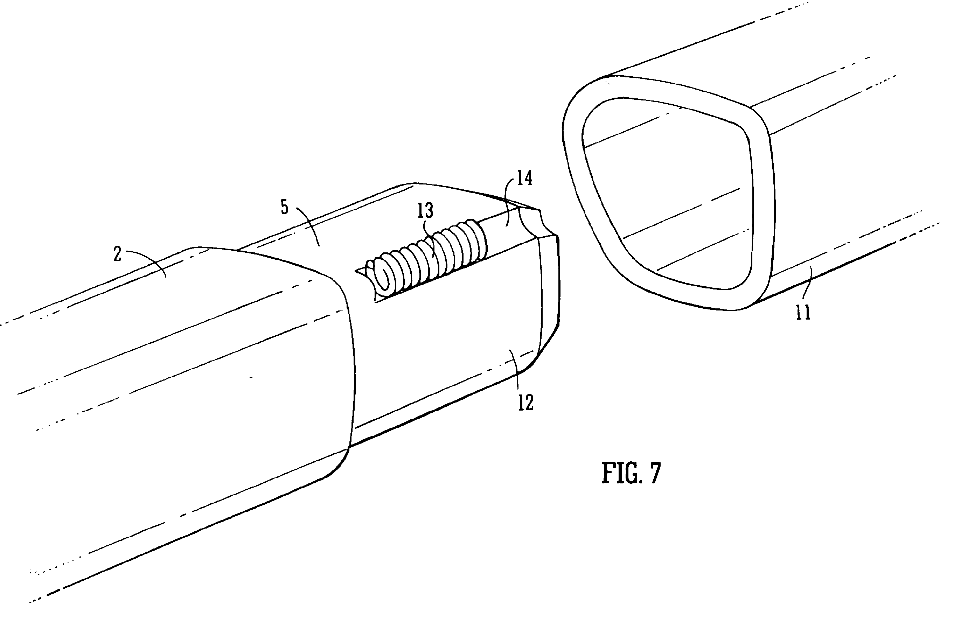

A further embodiment of the invention, as shown in Figure 7, comprises a compression spring 13 as the spring member. The plug portion 12 and rail 11 have the non-cylindrical cross-sectional shape shown in Figure 6. An open-ended groove 14 is formed in one corner of the plug portion 12 with its open end at the outer end of the plug portion 12. The groove 14 does not have to be open-ended. It could be closed (similar to the groove 7 in Figures 2 and 3) if preferred. The compression spring 13 is inserted into the groove 14 of which the width matches that of the spring. The spring 13 is elongate and coiled longitudinally and it is shaped and dimensioned such that, when the end of the rail 11 is pushed onto the plug portion 12, the coils of the compression spring 13 tend to fold down towards the bottom of the groove 14 so that the rail moves down onto the plug portion relatively easily. However, if the rail is pulled off the plug, the coils of the spring tend to stand up and become tightly wedged between the base of the groove end and the inner surface of the rail. Removal of the rail 11 from the plug portion 12 is then only possible by the application of considerable force.

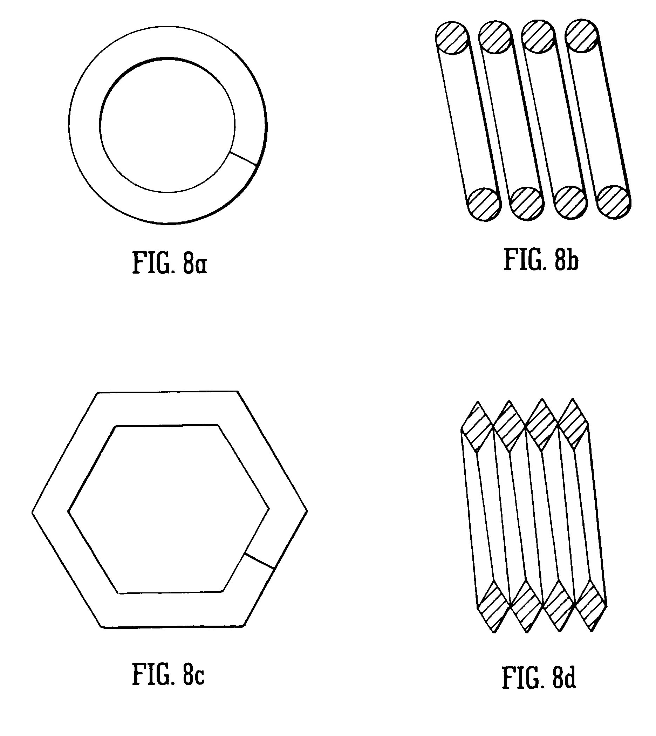

The spring 13 can comprise the usual cylindrical configuration (Figure 8a) of the coils and round cross section (Figure 8b) of the elongate spring material (wire) making up the coils, or it can comprise a different configuration. For example, the coils could be hexagonal as shown in Figure 8c. Also, the wire section could be a rhomboid as shown in Figure 8d.

Selection of the coil configuration and wire section makes it possible to obtain different removal forces.

In the embodiment of figure 7, no holes or slots are provided or needed in the rail or roof support - this is an advantage because it means less likelihood of cracks or fatigue starting.

In some embodiments of the invention, the slot, e.g. 7 and 10, in which the spring is received may be provided in the wall of the aperture rather than the inserted plug portion or partly in the inserted plug portion and partly in the wall of the aperture.

## Claims

1. A method for securing first and second members together, wherein a portion of the first member is inserted within an aperture in the second member and the inserted portion is held within said aperture by a spring engaged between the first and second members, characterised in that the spring (6, 10, 13) is elongate and is contained in an axially extending slot (7, 14).

2. A method according to Claim 1, wherein the spring is a roll pin (6, 10).

3. A method according to Claim 1, wherein the spring is a compression helical spring (13).

4. An assembly comprising a first member having a portion inserted in an aperture in a second member, and a spring engaged between the two members to hold the inserted portion in the aperture, characterised in that the spring (6, 10, 13) is elongate and contained in an axially extending slot (7, 14).

5. An assembly according to Claim 4, wherein the spring is a roll pin (6, 10).

6. An assembly according to Claim 4, wherein the spring is a helical spring (13).

7. An assembly according to Claim 6, wherein the spring is a coiled spring having a polygonal cross-sectional shape (Fig. 8b).

8. An assembly according to claim 6 or 7, wherein the cross-sectional shape of the wire forming the spring is non-circular (Fig. 8d).

9. An assembly according to Claim 4, 5, 6, 7 or 8, wherein the first and second members (2, 3) are components of a roof rack for a motor vehicle.
